## Europäisches Patentamt
## European Patent Office
## Office européen des brevets

(19)

(11) Veröffentlichungsnummer: **0 049 772**
**B1**

(12)

# EUROPÄISCHE PATENTSCHRIFT

(45) Veröffentlichungstag der Patentschrift:
02.01.85

(51) Int. Cl.³: **B 23 D 35/00**

(21) Anmeldenummer: **81107318.8**

(22) Anmeldetag: **16.09.81**

(54) **Rundes Scherenmesser.**

(30) Priorität: **13.10.80 DE 3038627**

(43) Veröffentlichungstag der Anmeldung:
**21.04.82 Patentblatt 82/16**

(45) Bekanntmachung des Hinweises auf die Patenterteilung:
**02.01.85 Patentblatt 85/1**

(84) Benannte Vertragsstaaten:
**AT BE CH DE FR GB IT LI NL**

(56) Entgegenhaltungen:
**DD - A - 79 188**
**DE - C - 917 288**
**DE - U - 1 842 609**
**DE - U - 1 959 445**
**DE - U - 7 801 776**
**GB - A - 1 120 029**
**US - A - 3 501 280**
**US - A - 3 541 910**
**US - A - 3 894 462**

**DIE MASCHINE, Band 25, Nr. 10, Oktober 1981,
Ludwigsburg W. WUICH "Einführung in die
Metallklebetechnik" Seiten 55 bis 57**

(73) Patentinhaber: **Thyssen Industrie AG, Am
Thyssenhaus 1, D-4300 Essen (DE)**

(72) Erfinder: **Labouvie, Heribert,
Mendelssohnstrasse 10 D-4005 Meerbusch-Strümp,
Neu-Schürkesfeld (DE)**

(74) Vertreter: **Eberhard, Friedrich, Dr., Am Thyssenhaus 1,
D-4300 Essen (DE)**

## Beschreibung

Die Erfindung betrifft ein rundes Scherenmesser aus zwei Teilen, einem zentralen, rundscheibenförmigen Tragkörper mit einem ringförmigen, an den Tragkörper angepaßten, mit dem Tragkörper verbundenen Schneidkörper. Derartige Messer, die zum Beispiel zum Besäumen von Feinblech eingesetzt werden, bedürfen eines häufigen Nachschleifens, um befriedigende Schnitteigenschaften aufzuweisen. Nach mehrfachem Nachschleifen ist das Messer wegen der damit verbundenen Durchmesserverkleinerung nicht mehr einsetzbar — im allgemeinen bewegen sich die Durchmessertoleranzen um 10%.

Durch den zweiteiligen Aufbau des Scherenmessers braucht dann nur der Schneidkörper ausgetauscht zu werden.

Aus dem DE-U-7 801 776 ist es bekannt, bei einem Scherenmesser den Schneidring mit dem Trägerkörper durch Löten zu verbinden. Die Gefährdung des Schneidringes durch Spannungen wird nach dem Gebrauchsmuster dadurch vermieden, daß beim Löten mit Kupfer, Nickel und Silberloten für den Trägerkörper und den Schneidring Metalle mit annähernd gleichen Ausdehnungskoeffizienten gewählt werden. Nach dem DE-U-1 959 445 wird bei einem Scherenmesser die Gefahr des Auftretens von Haarrissen im Schneidring durch Aufteilen des Schneidringes in einzelne Segmente und Auflöten vermieden. Die Verbindung der Schneidringe mit dem Trägerkörper durch Löten, wobei die Spannungsgefährdung durch aufwendige Maßnahmen vermieden wird, ist unvorteilhaft. Aus der DE-C-917 288 ist es bekannt, Verbindungen zwischen einem Rohr und einer Außenmuffe durch Klebschrumpfen durchzuführen, um enge Klebspalte mit hoher Festigkeit zu erzielen, z. B. zur Herstellung von Fahrradrahmen. Die Muffen sind dabei aus relativ zähem Material mit hohem Wärmeausdehnungskoeffizienten, um das Zusammenfügen zu erleichtern, z. B. Aluminium. Das Problem der Verbindung mit einem spannungsrißempfindlichen, harten Außenkörper tritt hierbei nicht auf.

Der Erfindung liegt die Aufgabe zugrunde, eine einfach herzustellende, feste und den Schneidring nicht gefährdende Verbindung zwischen dem Tragkörper und dem Schneidkörper eines Scherenmessers zu entwickeln.

Erfindungsgemäß wird diese Aufgabe bei einem runden Scherenmesser der eingangs genannten Gattung, die auf dem Stand der Technik nach der DE-U-7 801 776 beruht, dadurch gelöst, daß die Verbindung zwischen dem Tragkörper und dem Schneidkörper durch Klebschrumpfen hergestellt ist und daß der Außendurchmesser des Tragkörpers um 0,1 — 0,4‰ größer ist als der Innendurchmesser des Schneidkörpers vor dessen Aufdrücken auf den Tragkörper. Durch die genaue Abstufung, wonach der Außendurchmesser des Tragkörpers vor dem Aufschrumpfen um 0,1 — 0,4‰ größer als der Innendurchmesser des Schneidkörpers ist, wird einerseits die Zugspannung im Schneidkörper nicht so groß, daß der Schneidkörper gefährdet ist, andererseits wird durch die Verspannung, zusammen mit der Verklebung, eine sehr hohe Scherfestigkeit erreicht und durch die sich dabei ergebende dünne Klebstoffschicht eine gute Wärmeabfuhr zwischen Schneidkörper und Tragkörper. Bei dem erfindungsgemäßen runden Scherenmesser kann nach Verschleiß des Tragkörpers ein neuer Schneidkörper mit dem Tragkörper verbunden werden, nachdem der Rest des verschlissenen alten Schneidkörpers vom Tragkörper abgezogen worden ist. Der Materialverlust beschränkt sich dabei auf diesen abgezogenen Rest. Die Klebschrumpfverbindung des Schneidkörpers mit dem Tragkörper gibt einen trotz der hohen Beanspruchung sicheren Verbund und läßt einen sehr genauen Rundlauf ohne radialen oder axialen Schlag, der für runde Scherenmesser erforderlich ist, verwirklichen. Die erfindungsgemäße Klebschrumpfverbindung ermöglicht eine Freizügigkeit in der Materialauswahl; so kann für den Tragkörper ein einfacher Baustahl eingesetzt werden, der die gewünschte Festigkeit und Zähigkeit aufweist, und für den Schneidkörper Schnellarbeitsstähle oder andere legierte Stähle. Es ist auch möglich, verschlissene Scherenmesser der bekannten Bauart aus Messerstahl als Tragkörper einzusetzen und so alte Scherenmesser einer Wiederverwendung zuzuführen.

Im einzelnen kann die Erfindung wie folgt vorteilhaft ausgestaltet sein.

Dadurch, daß der Tragkörper und der Schneidkörper unter Belassung eines Klebspaltes durch einen geringfügig elastischen, beim Abbinden nicht schwindenden Kleber verbunden sind, erreicht man einen einfach herzustellenden, sicheren Verbund zwischen dem Tragkörper und dem Schneidkörper.

Als Klebstoff eignet sich wegen der Schwindungsfreiheit, der Scherzugfestigkeit, der Verformbarkeit und der Alterungsbeständigkeit ein Zweikomponentenkleber, insbesondere ein silicon-phenol-modifizierter Zweikomponenten-Epoxidkleber.

Auch der Einsatz von Einkomponentenklebern, die genügend schwindungsfrei trocknen und nicht zu weich sind, ist möglich. Beim Klebschrumpfen wird beim Ineinanderfügen entweder der Tragkörper unter Raumtemperatur abgekühlt oder der Schneidkörper erwärmt oder es werden beide Maßnahmen angewandt. Beim Temperaturausgleich wird dann der überschüssige Klebstoff aus dem enger werdenden Spalt verdrängt. Einkomponentenkleber auf Epoxidbasis mit Phenolharz- oder Nylonharzzugabe sind bezüglich der Scherzugfestigkeit, der Verformbarkeit und der Alterungsbeständigkeit bestens geeignet; schwieriger ist bei diesen Klebstoffen die Aushärtung, die nur unter Wärme von 100 bis 150°C unter entsprechendem Anpreßdruck befriedigend erfolgt. Diese Kleber sind für das Klebschrumpfen besonders geeignet, wenn der Arbeitsring zum Aufziehen erwärmt wird. Die Wärme bringt die notwendige Erwärmung des Klebstoffes, das Zusammenziehen bei der Abkühlung den Anpreßdruck.

In einer Ausführungsart der Erfindung ist der Tragkörper als Zylinder ausgebildet mit einem Rundflansch an einer Stirnfläche und der Schneidkörper ein auf den Tragkörper passender Hohlzylinder, der mit einer Stirnfläche an dem Flansch des Tragkörpers anliegt. Der Flansch dient dabei zur Zentrierung hinsichtlich der Achsrichtung. Der Hohlzylinder ist eine besonders einfach herzustellende Form für den Schneidkörper. Die dem Flansch des Tragkörpers gegenüberliegende Fläche des Schneidkörpers kann entweder bündig mit der Stirnfläche des Tragkörpers abschließen oder auch geringfügig darüber hinausstehen. Ein derartiges Messer ist nur einseitig, also nicht als Wendemesser einsetzbar.

Ein beidseitiger Einsatz des Messers, also auch als Wendemesser, wird dadurch ermöglicht, daß der Tragkörper als Zylinder mit einem Rundflansch an einer Stirnseite und der Schneidkörper als Hohlzylinder mit einem Rundinnenflansch an einer Stirnseite ausgebildet sind und die Flansche beider Körper im Durchmesser den Zylinderflächen angepaßt sind.

Dadurch, daß beide Stirnflächen des Schneidkörpers geringfügig über die Stirnflächen des Tragkörpers hinausragen, wird das Nachschleifen der Stirnteile der Schneidflächen erleichtert. Wenn man die Stirnflächen des Schneidkörpers dagegen bündig mit den Stirnflächen des Tragkörpers ausführt, erhält man ein besonders robustes, unempfindliches Messer.

Das Spektrum der Materialien für die Schneidkörper hat eine sehr große Breite; es reicht vom Schnellstahl bis zu mittellegierten Stählen.

Im folgenden wird anhand einer Zeichnung ein Ausführungsbeispiel der Erfindung erläutert. Es zeigt im einzelnen

Fig. 1 ein Schneidmesser in Draufsicht,

Fig. 2 das Schneidmesser nach Fig. 1 im Schnitt A-A nach Fig. 1,

Fig. 3 einen Schnitt entsprechend Fig. 2 mit zwei Ausführungsarten in der linken und in der rechten Schnitthälfte und

Fig. 4 einen Schnitt entsprechend Fig. 2 mit einer weiteren Ausführungsart.

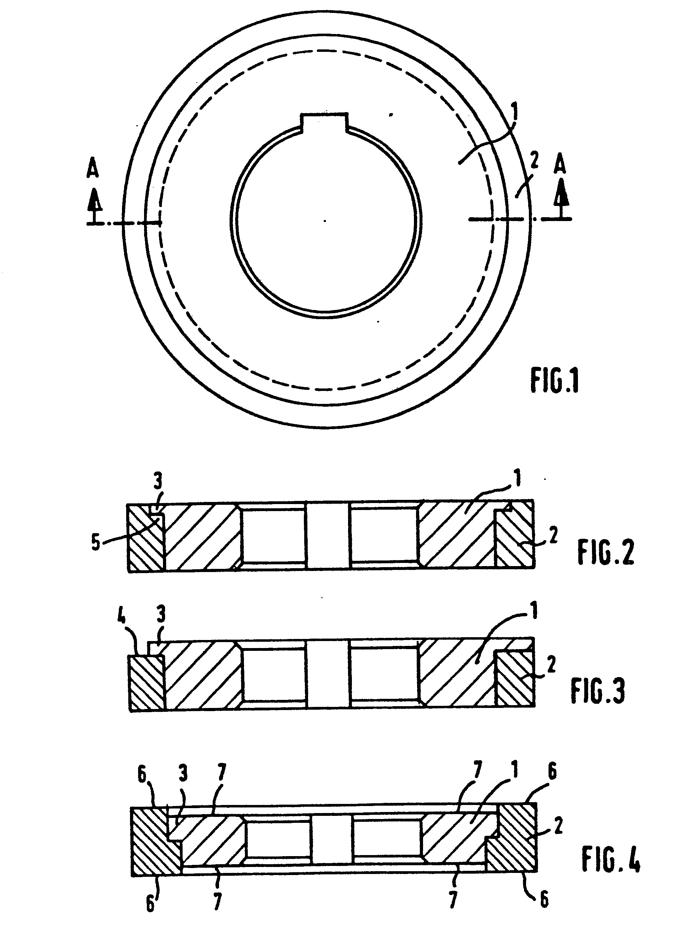

Das runde Schermesser besteht aus zwei Teilen, einem zentralen rundscheibenförmigen Tragkörper 1 und einem ringförmigen, an den Tragkörper 1 angepaßten, mit ihm verbundenen Schneidkörper 2. Der Tragkörper 1 und der Schneidkörper 2 nach Fig. 1 und 2 sind unter Belassung eines Klebspaltes von 0,1 mm durch einen geringfügig elastischen, beim Abbinden nicht schwindenden Kleber, nämlich einen silikon-phenol-modifizierten Zweikomponenten-Epoxidkleber, verbunden. Bei den Scherenmessern nach den Fig. 3 und 4 ist mit einer Schrumpfklebung mit einem Schrumpfsitz von 0,3‰ gearbeitet worden.

Bei dem Scherenmesser nach der Fig. 3 weist der Tragkörper 1 an einer Stirnfläche einen Rundflansch 3 auf, an dem der hohlzylinderförmige Schneidkörper 2 mit einer Stirnfläche 4 anliegt. Nach der linken Hälfte der Fig. 3 ist die Länge des Flansches 3 geringer als die Radialerstreckung des ringförmigen Schneidkörpers; bei der rechten Hälfte ist sie diesem gleich. Das Messer nach Fig. 3 ist nur für einseitiges Schneiden, also nicht als Wendemesser einsetzbar. Der Einsatz als Wendemesser ist bei dem Schneidmesser nach Fig. 1, 2 und 4 möglich; bei diesem liegt der Schneidkörper 2 an beiden Stirnflächen frei.

Nach den Fig. 1 und 2 ist der Tragkörper 1 als Zylinderfläche mit einem Rundflansch 3 an einer Stirnfläche ausgebildet, und der Schneidkörper 2 als Hohlzylinder mit einem Innenrundflansch an einer Stirnseite und die Flansche beider Körper sind im Durchmesser den Zylinderflächen angepaßt. Auf diese Weise passen die beiden Teile buchsenartig ineinander. Das Scherenmesser nach Fig. 4 entspricht dem nach Fig. 2; zusätzlich ragen beide Stirnflächen 6 des Schneidkörpers 2 geringfügig über die Stirnflächen 7 des Tragkörpers 1 hinaus.

Der Tragkörper ist ein verschlissenes, aufgearbeitetes Messer, der Mantel ein legierter, an das zu schneidende Material angepaßter Stahl.

Nach einem Verschleiß des Schneidmessers von z. B. 300 mm Anfangsaußendurchmesser auf 280 mm wird der verbleibende Rest des Schneidkörpers, der bei einem Durchmesser von 240 mm des Tragkörpers noch 20 mm stark ist, abgetrennt und durch einen neuen Schneidkörper ersetzt. Auch verbrauchte, einteilige Schneidmesser nach dem Stand der Technik können entsprechend der Erfindung umgerüstet werden, wobei das verbrauchte Schneidmesser als Tragkörper Verwendung findet.

**Patentansprüche**

1. Rundes Scherenmesser aus zwei Teilen, einem zentralen, rundscheibenförmigen Tragkörper (1) mit einem ringförmigen, an den Tragkörper (1) angepaßten, mit dem Tragkörper (1) verbundenen Schneidkörper (2), dadurch gekennzeichnet,
daß die Verbindung zwischen dem Tragkörper (1) und dem Schneidkörper (2) durch Klebschrumpfen hergestellt ist und
daß der Außendurchmesser des Tragkörpers (1) um 0,1 bis 0,4‰ größer ist als der Innendurchmesser des Schneidkörpers (2) vor dessen Aufdrücken auf den Tragkörper (1).

2. Scherenmesser nach Anspruch 1, dadurch gekennzeichnet, daß der Tragkörper (1) und der Schneidkörper (2) durch einen geringfügig elastischen, beim Abbinden nicht schwindenden Kleber verbunden sind.

3. Scherenmesser nach Anspruch 2, dadurch gekennzeichnet, daß der Klebstoff ein silikon-phenol-modifizierter Zweikomponenten-Epoxid-

kleber ist.

4. Scherenmesser nach Anspruch 1 oder 2, dadurch gekennzeichnet, daß der Kleber ein Einkomponentenkleber auf Epoxidbasis mit Phenolharz oder Nylonharzzugabe ist.

5. Scherenmesser nach einem der obigen Ansprüche, dadurch gekennzeichnet, daß der Tragkörper (1) ein Zylinder mit einem Rundflansch (3) an einer Stirnfläche ist und der Schneidkörper (2) ein auf den Tragkörper (1) passender Hohlzylinder ist, der mit einer Stirnfläche (4) an dem Flansch (3) des Tragkörpers (1) anliegt.

6. Scherenmesser nach einem der Ansprüche 1 bis 4, dadurch gekennzeichnet, daß der Tragkörper (1) als Zylinder mit einem Rundflansch (3) an einer Stirnfläche und der Schneidkörper (2) als Hohlzylinder mit einem Rundinnenflansch (5) an einer Stirnfläche ausgebildet ist und die Flansche beider Körper im Durchmesser den Zylinderflächen angepaßt sind.

7. Scherenmesser nach Anspruch 6, dadurch gekennzeichnet, daß beide Stirnflächen (6) des Schneidkörpers (2) geringfügig über die Stirnflächen (7) des Tragkörpers (1) hinausragen.

## Claims

1. Circular shearing cutter comprising two parts, a central supporting element (1) in the form of a round disc together with an annular cutting element (2) which is connected to the supporting element (1) and is adapted to the supporting element (1), characterised in that the connection between the supporting element (1) and the cutting element (2) is brought about by adhesive shrinking, and that the external diameter of the supporting element (1) is 0.1 to 0.4‰ greater than the internal diameter of the cutting element (2) before the latter is pressed on to the supporting element (1).

2. Shearing cutter according to claim 1, characterised in that the supporting element (1) and the cutting element (2) are connected by a slightly elastic adhesive which does not shrink when it sets.

3. Shearing cutter according to claim 2, characterised in that the adhesive is a silicone-phenol-modified two-component epoxy resin adhesive.

4. Shearing cutter according to claim 1 or 2, characterised in that the adhesive is a single-component adhesive with an epoxy resin base with addition of phenolic or nylon resin.

5. Shearing cutter according to one of the preceding claims, characterised in that the supporting element (1) is a cylinder with a round flange (3) at one face, and the cutting element (2) is a hollow cylinder which fits on to the supporting element (1) and with one face (4) abuts on the flange (3) of the supporting element (1).

6. Shearing cutter according to one of claims 1 to 4, characterised in that the supporting element (1) is constructed as a cylinder with a round flange (3) at one face, and the cutting element (2) is constructed as a hollow cylinder with a round internal flange (5) at one face, and the flanges of the two elements are adapted in diameter to the cylinder surfaces.

7. Shearing cutter according to claim 6, characterised in that both faces (6) of the cutting element (2) project slightly above the faces (7) of the supporting element (1).

## Revendications

1. Lame de coupe circulaire en deux parties, un corps support central en forme de disque (1) et un corps de coupe annulaire (2) adapté au corps support (1) et solidaire de celui-ci, caractérisée par le fait que l'assemblage du corps support (1) et du corps de coupe (2) est réalisé par frettage collé et que le diamètre extérieur du corps support (1) est supérieur de 0,1 à 0,4‰ au diamètre intérieur du corps de coupe (2) avant l'application de ce dernier sur le corps support (1).

2. Lame de coupe selon la revendication 1, caractérisée par le fait que le corps support (1) et le corps de coupe (2) sont assemblés par une colle légèrement élastique et sans retrait à la prise.

3. Lame de coupe selon la revendication 2, caractérisée par le fait que la colle est une colle époxy à deux constituants modifiée au silicone-phénol.

4. Lame de coupe selon l'une des revendications 1 et 2, caractérisée par le fait que la colle est une colle à un seul constituant à base époxy avec addition de résine phénolique ou de résine de polyamide.

5. Lame de coupe selon l'une des revendications 1 à 4, caractérisée par le fait que le corps support (1) est un cylindre pourvu d'une bride circulaire (3) sur une face frontale et le corps de coupe (2) est un cylindre creux s'ajustant sur corps support (1) et s'appuyant par une face frontale (4) sur la bride (3) du corps support (1).

6. Lame de coupe selon l'une des revendications 1 à 4, caractérisée par le fait que le corps support (1), formé d'un cylindre, est pourvu d'une bride circulaire (3) sur une face frontale et le corps de coupe (2), formé d'un cylindre creux, est pourvu d'une bride circulaire intérieure (5) sur une face frontale et les brides des deux corps sont adaptées en diamètre aux surfaces cylindriques.

7. Lame de coupe selon la revendication 6, caractérisée par le fait que les deux faces frontales (6) du corps de coupe (2) font légèrement saillie hors des faces frontales (7) du corps support (1).

FIG.1

FIG.2

FIG.3

FIG. 4